(19) Europäisches Patentamt
European Patent Office
Office européen des brevets

(11) EP 0 505 861 B1

(12) EUROPEAN PATENT SPECIFICATION

(45) Date of publication and mention of the grant of the patent:
**01.12.1999 Bulletin 1999/48**

(51) Int Cl.[6]: **C08J 7/04**, C09K 3/16
// G11B5/72, C08L67:02

(21) Application number: **92104413.7**

(22) Date of filing: **13.03.1992**

(54) **Coated film**

Beschichtete Folie

Film revêtu

(84) Designated Contracting States:
**DE FR GB IT LU NL**

(30) Priority: **18.03.1991 JP 5275191**

(43) Date of publication of application:
**30.09.1992 Bulletin 1992/40**

(73) Proprietor: **Mitsubishi Polyester Film Corporation**
**Bunkyo-ku Tokyo (JP)**

(72) Inventors:
- **Okajima, Nariaki**
  **Yokohama-shi, Kanagawa-ken (JP)**
- **Takeda, Naohiro**
  **Yokohama-shi, Kanagawa-ken (JP)**
- **Takahashi, Jun**
  **Yokohama-shi, Kanagawa-ken (JP)**

(74) Representative:
**TER MEER STEINMEISTER & PARTNER GbR**
**Mauerkircherstrasse 45**
**81679 München (DE)**

(56) References cited:
**EP-A- 0 362 568**

- **DATABASE WPIL Section Ch, Week 9026, Derwent Publications Ltd., London, GB; Class A89, AN 90-196232**

Remarks:
The file contains technical information submitted after the application was filed and not included in this specification

EP 0 505 861 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a coated polyester film which is excellent in antistatic properties, adhesion, transparency and slipperiness.

Biaxially oriented polyester films are widely used as useful materials in various fields, for example, as base films of magnetic recording media, films for printing, etc., because they have excellent properties such as mechanical strength, dimensional stability, planeness, heat resistance, smoothness, chemical resistance and transparency. On the other hand, however, they involve a problem with respect to the ease of being charged. Furthermore, the polyester films have excellent solvent resistance, but they are inferior in adhesion. The polyester films are processed to highly processed products such as magnetic recording media, graphic arts, displays, building materials, packaging materials, electrical insulating materials, etc. and other general industrial products. In some cases, the polyester films may be inferior to adhesion to a coating agent such as a printing ink, and the inferior adhesion makes the polyester films defective in their durability.

Generally, as a method for preventing polyester films from being charged, the following methods may be mentioned: a method in which an anionic compound such as an organic sulfonate or an organic phosphate is incorporated, a method in which a metal compound is vapor-deposited, and a method in which an anionic compound, a cationic compound or so-called electroconductive particles are coated.

The method in which an anionic compound is incorporated into the polyester can be used at low cost but has a limited antistatic effect, as well as having the problem that since the usable compound is a low-molecular weight compound, blooming of the anionic compound occurs on the polyester film to cause a reduction in adhesion between the polyester film and any layer laminated thereon, an absence of water resistance, and a transfer of the anionic compound to another film or a delivery roll.

A cationic compound such as a quaternary ammonium salt is inferior in thermal stability to the anionic compound, and can not be used for the incorporation because incorporation at a melting temperature of polyester causes the degradation of the cationic compound.

The method in which a metal compound is vapor-deposited on the polyester films is capable of producing films which exhibit excellent antistatic properties and which have been recently widely used for producing transparent electroconductive films. However, though this method is suitable for particular applications, it cannot easily be employed for producing general antistatic films because of its high production cost. The method in which electroconductive carbon or metal particles are coated has an advantage in that the film produced by the method exhibits a relatively good antistatic effect and the method is capable of producing antistatic films at a relatively low cost, but has a problem in that the transparency of the film produced deteriorates.

The method in which an anionic compound or a cationic compound is coated as an antistatic agent on the polyester films is therefore widely used as an antistatic method for the polyester films.

One method of producing biaxially oriented polyester films having coating layers is the so-called in-line coating method (also referred to as post-coating stretching method) in which a film or sheet is stretched after a coating solution was coated thereon, and then subjected to heat treatment. In this method, since the formation of a film and the coating are simultaneously performed, it is possible not only to obtain wide films at a relatively low cost but also to obtain polyester films exhibiting excellent adhesion to coating layers and having thinner coating layers and characteristic surface properties, as compared with a method in which coating layers are formed by applying a coating solution to polyester films which have been biaxially stretched.

When antistatic polyester films are produced by the in-line coating method, however, since the antistatic agent is thermally unstable, the antistatic agent used volatilizes or is thermally decomposed during the stretching and heat treatment process if in-line coating is carried out under normal conditions. This prevents the exhibition of an expected antistatic effect in some cases.

In addition, when conditions for the heat treatment such as the temperature and the residence time of a film are moderated, although the antistatic effect can be exhibited because the volatilization and decomposition of the antistatic agent are prevented, only films exhibiting unsatisfactory mechanical strength and dimensional stability may be produced.

As a method for improving adhesion of a biaxially stretched polyester film, the following methods may be mentioned: a method of forming a film from a copolyester, a method of incorporating an other polymer such as a polyether, a method of treating a film with a solvent, corona discharge treatment, and plasma treatment. However, improvements on adhesion effected by these methods have their limits. There is, therefore, some advantages in a method laminating a polymer having adhesiveness by coating.

As mentioned above, though a film excellent in antistatic properties and adhesion as well as transparency and strength of coating are desired, it has been difficult to simultaneously satisfy all of the above properties. Little antistatic agent is suitable for an in-line coating method, and when the amount of the antistatic agent in the coating layer is increased for expecting the antistatic properties, adhesion is decreased before sufficient antistatic properties

are obtained, in many cases. Some antistatic agents exhibit no antistatic properties even if the antistatic agent is added to a coating layer in an amount of 50 wt% or more. resulting no exhibition of both antistatic properties and adhesion.

EP-A-O 362 568 discloses an antistatic polyester film comprising a coating layer on one or both surfaces of the polyester film. The coating layer contains a polymer having cationic nitrogens in the main chain thereof, and further contains at least one selected from the group consisting of cross-linking agents. inorganic particles and polymers other than the polymer having cationic nitrogens.

Films having antistatic properties are expected to be used in various fields by laminating other various layers thereon, but uses of the films have been limited due to the above-mentioned problems.

As a result of energetic investigations performed by the inventors in consideration of the above-described problem, the inventors have found that a polyester film having a particular coating layer exhibits excellent properties and is very useful as materials in various fields.

The present invention has been accomplished based on these findings.

According to the present invention, there is provided a coated film which comprises a polyester film and at least one coating layer on one or both surfaces of said polyester film; said coating layer comprising (a) a polymer having cationic nitrogens in the main chain thereof, (b) a binder polymer selected from the group consisting of polyesters, polyacrylates, polyurethanes, chlorine-containing polymers and mixtures thereof, (c) particles having an average particle size of not more than 10 µm, and (d) a cross-linking agent selected from the group consisting of melamine cross-linking agents, epoxy cross-linking agents and mixtures thereof;
which is characterized in that said particles are selected from the group consisting of polyhydric alcohol graft-treated inorganic particles, surfactant treated organic particles and mixtures thereof, said inorganic particles being selected from the group consisting of silicon dioxide, alumina, zirconium oxide, titanium oxide, antimony oxide and carbon black.

As the polyester which composes the polyester film, polyethylene terephthalate comprising 80 mol% or more of ethylene terephthalate unit and 20 mol% or less of the other copolymerized unit, polyethylene naphthalate comprising 80 mol% or more of polyethylene naphthalate unit and 20 mol% or less of the other copolymerized unit, or poly-1,4-cyclohexanedimethylene terephthalate comprising 80 mol% or more of 1,4-cyclohexanedimethylene terephtalate unit and 20 mol% or less of the other copolymerized unit may be used.

The polyester film may contain inorganic particles, organic particles, an organic lubricant, a stabilizer, a dye, a pigment, and an organic polymer, as occasion demands. For example, in case of a white film for a magnetic card, white particles such as particles of titanium oxide, silica, or calcium carbonate may be incorporated into the polyester, or polyolefin such as polypropylene may be incorporated into the polyester to form a film containing small cells.

As a method for obtaining a cellular polyester film, there may be mentioned a method described in Japanese Patent Application Laid Open (KOKAI) No. 63-168441 (1988).

Small cells can be formed by incorporating a particular polypropylene into a polyester, extruding the polyester into a sheet shape, and stretching the sheet in at least one direction. For example, a polyester film containing a large number of small independent cells on the surfaces and in the mass can be obtained by incorporating 3 to 20% by weight of a crystalline polypropylene homopolymer having a melt flow index (M.F.I.) of about 0.2 to 120 into a polyester, extruding the polyester to form a substantially amorphous sheet, and stretching the sheet in at least one direction by 4 times or more in terms of ratio by area.

As an example of a polymer having cationic nitrogens in the main chain thereof used in the present invention, an ionene polymer may be mentioned. The ionene polymer is described in detail in Chapter 4 "IONENE POLYMERS: PREPARATION, PROPERTIES AND APPLICATIONS", ALAN D. WILSON AND HAVERD J. PROSSER (Ed.) "DEVELOPMENTS IN IONIC POLYMERS-2" ELSEVIER APPLEID SCIENCE PUBLISHERS, pp. 163-189, issued in 1986.

Especially, an ionene polymer having a constitutional unit represented by the following formula (I) or (II) may be used:

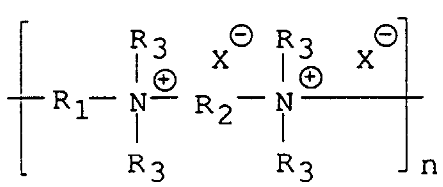

(I)

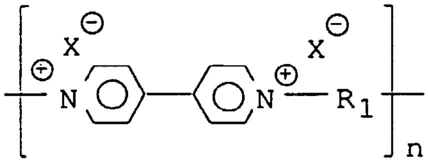

(II)

wherein X is bromine or chlorine; each of $R_1$ and $R_2$ independently represents an alkylene group (such as methylene group, ethylene group, or propylene group), an arylene group (such as phenylene group, tolylene group, or xylylene groups), a divalent group (A) containing a hetero element which is derived from an ether or a derivative thereof (such as dimethyl ether, or diethyl ether), urea or a derivative thereof (such as N,N'-dimethyl urea or N,N'-diethyl urea), piperazine or a derivative thereof, or a divalent group (B) derived from a polymer or oligomer (such as polyacrylate, polyester, polyurethane, polyolefin, halogenated polyolefin, or polyethylene glycol); said alkylene group, said arylene group and said divalent group (A) may be substituted by a characteristic group (such as a monovalent group derived from an ester, an ether, an alcohol, an amide, an urethane, or a ketone) (e.g. 2-hydroxy-1,3-propylene group); $R_3$ represents methyl group or ethyl group, preferably methyl group and n is an integer. However, $R_1$ and $R_2$ are not limited to the above examples.

As a method of synthesizing ionene polymers, the reactions described below which are described in the above publication can be employed, but the method is not limited to them.

(1)

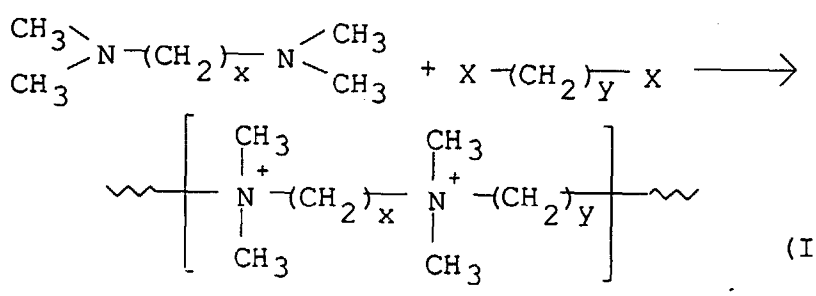

(III)

wherein X is a halogen element such as Br or Cl, x and y are respectively any desired integer of 1 or more and may be either the same or different.

(2)

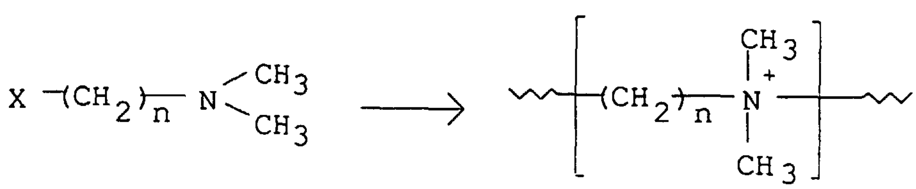

(IV)

wherein X is a halogen element such as Br or Cl and n is any desired integer of 1 or more.

(3)

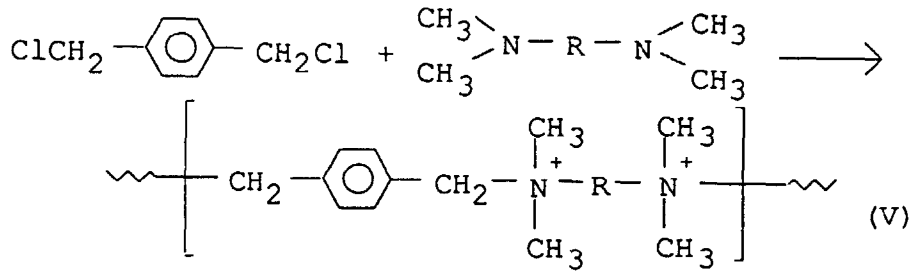

(V)

wherein R is the same divalent group as defined for $R_1$ and $R_2$ in formula (I).

(4)

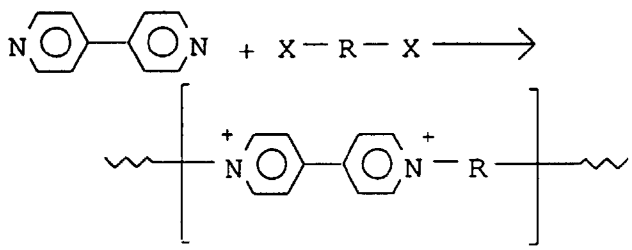

(VI)

wherein X is a halogen element such as Br or Cl and R is the same divalent group as defined for $R_1$ and $R_2$ in formula (I).

(5)

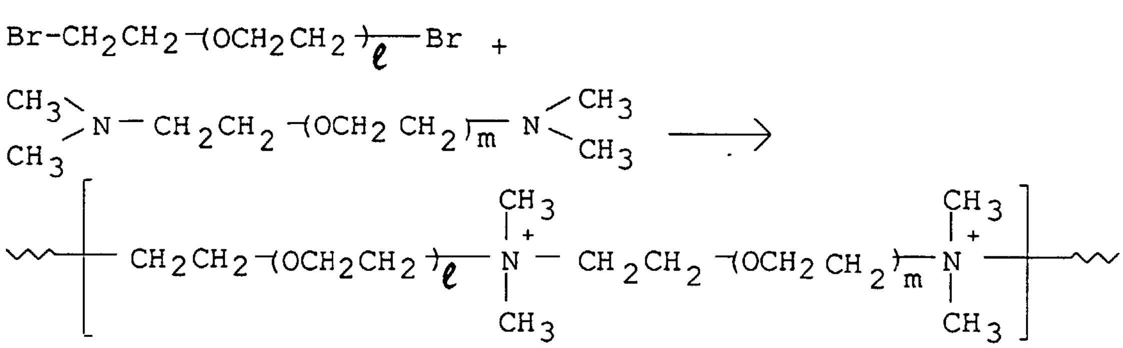

(VII)

wherein m and $\ell$ are respectively integers of 1 to 4.

(6)

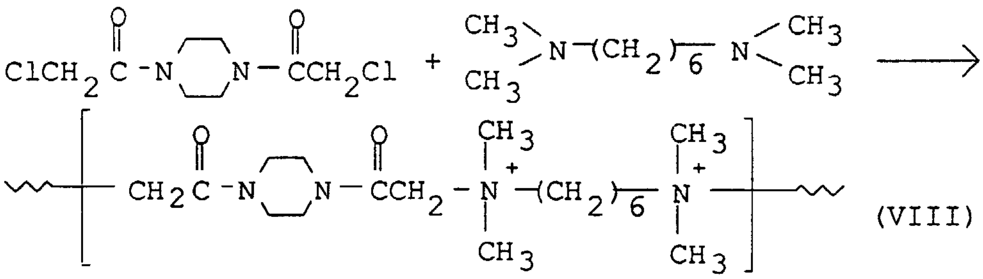

(VIII)

(7)

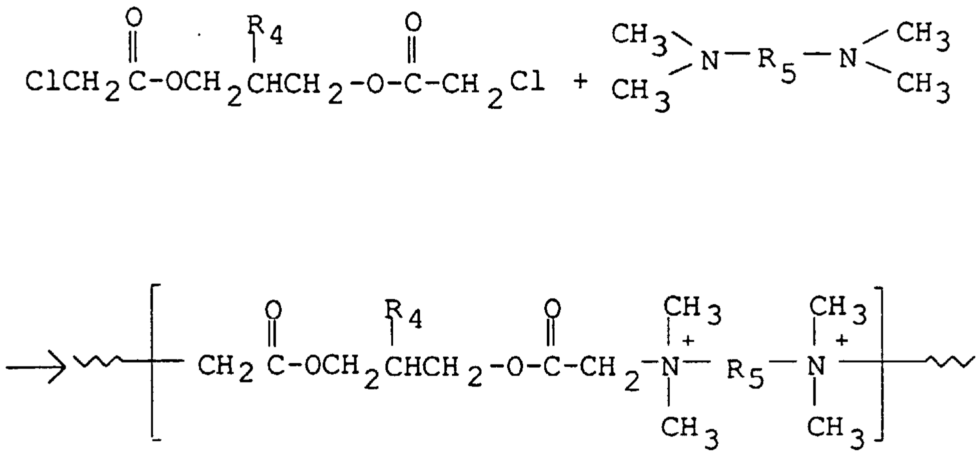

(IX)

wherein $R_4$ is an alkyl group and $R_5$ is an alkylene group.

(8)

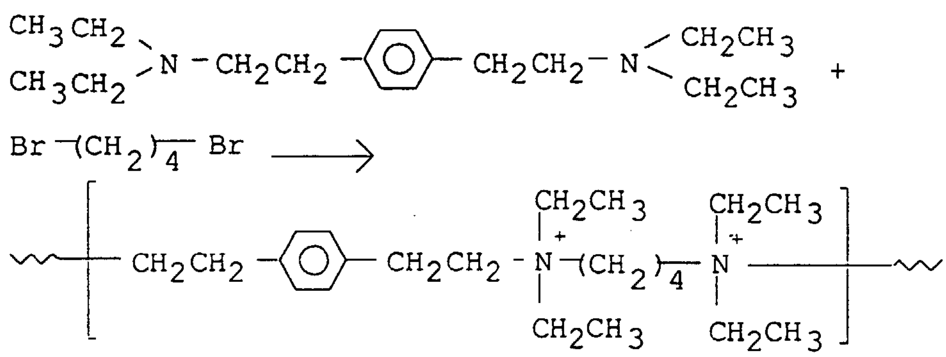

(X)

(9)

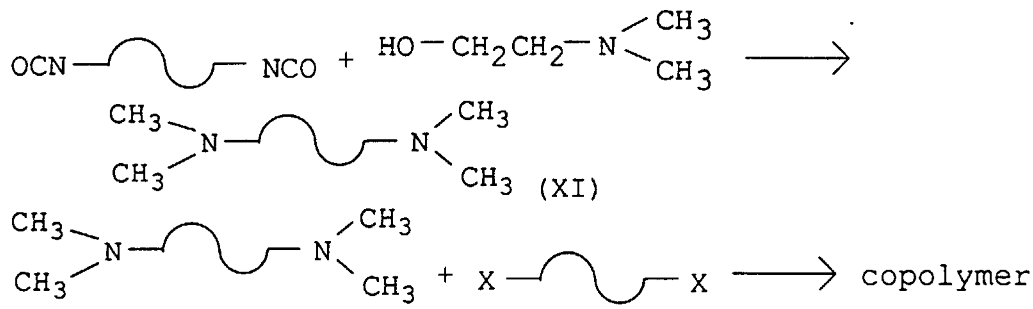

wherein X is a halogen element such as Br or Cl, 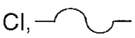 is a divalent group derived from various polymers and oligomers or the same divalent group as defined for $R_1$ and $R_2$ in formula (I).

In addition to the linear polymer, an ionene polymer having a network structure may be also mentioned. An example of the ionene polymer is a condensate of an amine compound having a plurality of active hydrogen (e.g., diethylamine and polyethyleneimine) and an epoxy compound (e.g., epichlorohydrine).

Examples of ionene polymers and derivatives thereof include the compounds disclosed in Japanese Patent Publication Nos. 53-23377 and 54-10039 and Japanese Patent Application Laid-Open (KOKAI) Nos. 47-34581, 56-76451, 58-93710, 61-18750 and 63-68687. The ionene polymers used in the present invention are not limited to these compounds.

Further, ionene polymers having urea bonds in the main chain thereof described below may be used.

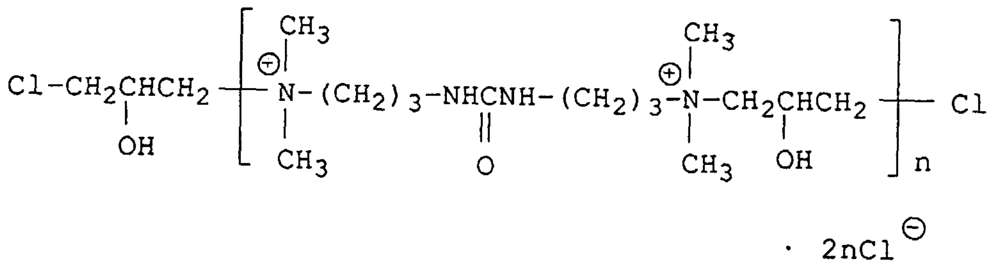

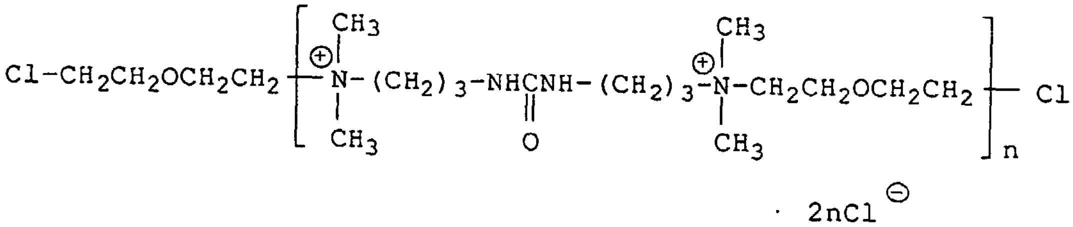

The polymer having cationic nitrogens in the main chain thereof used in the present invention has preferably a molecular weight of 1,000 to 100,000, more preferably 3,200 to 60,000.

The coating layer according to the present invention comprises an antistatically effective amount of the polymer having cationic nitrogens in the main chain thereof. Ordinarily, the content of the polymer having cationic nitrogens in the main chain thereof in the coating layer is 5 to 95% by weight, preferably 10 to 50% by weight.

The coating layer contains a binder polymer selected from the group consisting of polyesters, polyacrylates, polyurethanes, chlorine-containing polymers and mixtures thereof. The polyesters, the polyacrylates, the polyurethanes and the chlorine-containing polymers are those conventionally used as a coating agent. Examples of the chlorine-containing polymer include polyvinylidene chloride, polyvinyl chloride, chlorinated polyolefin, vinyl chloride-vinyl acetate copolymer, and chloroprene. Preferably, the polymer is hydrophilic or water-dispersible. The polymer which is hydrophilic may be obtained by copolymerization using a nonionic, cationic or ampho-ionic component as one of the comonomers, whereby being dispersed in water. Alternatively, a water dispersion of the polymer may be obtained by forced emulsification of the polymer in the presence of a nonionic, cationic or ampho-ionic surfactant or by emulsion polymerization in the presence of a nonionic, cationic or ampho-ionic surfactant.

As these binder polymer, a copolymer such as a random copolymer, a block copolymer and a graft copolymer or an aggregate of different polymers may be used. Examples of the copolymer include polyurethene-graft-polyacrylate and polyester-graft-polyacrylate which can be obtained by emulsion polymerization of acryl monomers in the presence of an aqueous solution or water dispersion of polyurethane or polyester. However, the copolymer is not limited to them.

The content of the binder polymer in the coating layer is preferably 5 to 95% by weight, more preferably 40 to 90% by weight.

The coating layer comprises particles as defined above.

The inorganic particles are selected from the group consisting of silicon dioxide, alumina, zirconium oxide, titanium oxide, antimony oxide and carbon black. Examples ofthe organic particles include polystyrene or polyacrylate which is cross-linked with a compound having at least two carbon-carbon double bonds per one molecule (e.g., divinylbenzene), or an organic compound such as melamine-formaldehyde resins, benzoguanamine-formaldehyde resins, and phenol-formaldehyde resins; particles of a fluorine-containing resin such as polytetrafluoroethylene, tetrafluoeoethylene-ethylene copolymer, polyvinylidene fluoride, tetrafluoroethylenehexafluoropropylene copolymer, tetrafluoroethyleneperfluoroalkylvinylether copolymer, and polychlorotrifluoroethylene.

According to the invention, it is provided to use inorganic particles which are subjected to graft-treatment of the surface with a polyhydric alcohol such as ethylene glycol; organic particles which are treated with a surfactant; and fluorine-containing resin particles which are treated with a nonionic surfactant, because these particles have good dispersion stability in the coating layer and form no agglomerated coarse particle.

An example of a method for graft-treatment of inorganic particles with a polyhydric alcohol such as ethylene glycol is that described in Journal of Physical Chemistry, Vol.65, pp. 20-25, issued 1961, with using silicon dioxide. When the method is used in the present invention, a treatment in a polyhydric alcohol at the boiling point of the polyhydric alcohol increases the graft ratio to improve dispersion stability.

The organic particles which are treated with a surfactant may be obtained by emulsion polymerization at which the surfactant is added to monomers. As the surfactant, the following surfactants may be used: a nonionic-anionic surfactant having a nonionic moiety such as polyethylene glycol and an anionic moiety such as a sulfonate salt or a sulfate ester in one molecule (e.g., an alkylphenoxypolyoxyethylenealkylsulfonic acid salt, a polyoxyethylenealkyl-sulfophenyl ether salt, a polyoxyethylenealkyl ether sulfuric acid ester salt or a polyoxyethylenealkylphenyl ether sulfuric acid ester salt), an anionic surfactant (e.g., a sulfonate salt such as sodium dodecylbenzenesulfonate, or a sulfate salt such as sodium lauryl sulfate), and a cationic surfactant (e.g., dodecyltrimethylammomium chloride).

Ordinarily, organic particles which are treated with an anionic surfactant are further treated by a cationic surfactant, because the organic particles which are treated with the anionic surfactant are somewhat inferior in stability in the coating layer. The anionic particles may be converted to cationic particles by adding gradually a cationic surfactant, under stirring, to a water dispersion containing not more than 20% by weight of the organic particles which are treated with the anionic surfactant.

Treatment of the fluorine-containing resin particles with a nonionic surfactant may be performed by emulsion polymerization in which the nonionic surfactant was added to monomers. Examples of the nonionic surfactant include polyalkylene glycol, alkylpolyoxyalkylene glycol and block copolymers thereof (e.g., Tetronic and Pluronic surfactants), fatty acid polyoxyethylene esters, fatty acid polyoxyethylenesorbitan esters, fatty acid polyoxyethylenesorbitol esters, alkylpolyoxyethylene amines or amides, fatty acid sorbitan esters, fatty acid polyglycerin esters or fatty acid sucrose esters.

In the present invention are used particles having a average particle size of not more than 10 μm. The average particle size may be selected depending on the thickness of the coating layer, and is ordinarily 0.5 to 3 times, preferably 0.8 to 2 times of the thickness of the coating layer.

The content of the particles in the coating layer is ordinarily 0.1 to 30% by weight, preferably 1 to 20% by weight.

Into the coating layer of the film of the present invention, further a lubricant can be incorporated to improve slipperiness and appropriate mold release characteristics to the film. Examples of the lubricant include polyolefin waxes, mineral oils, animal and vegetable oils, waxes, esters, metallic soaps, graphite, or molybdenite. The polyolefin wax does not impair adhesion and therefore is ordinarily used.

The content of the lubricant in the coating layer is ordinarily 0.1 to 20% by weight, preferably 1 to 10% by weight, if present.

The coating layer comprises a cross-linking agent selected from the group consisting of melamine cross-linking agents, epoxy cross-linking agents and mixtures thereof.

Examples of the melamine cross-linking agent contained in the coating layer include an alkylolated or alkoxyalkylolated melamine compound such as methoxymethylated melamine, or butoxymetylated melamine. A partial cocondensate of melamine with urea may be also used.

The epoxy cross-linking agent may be a compound having epoxy group, which is water-soluble or has a water-solubilization ratio of not less than 50%.

By addition of the cross-linking agent, the antiblocking property, water resistance and mechanical strength

are improved. Consequently, when an upper coating layer is coated on the coating layer, antistatic property is also exhibited on the upper coating layer. In addition, the antistatic property is surprisingly improved as well as adhesion with the upper coating layer. Especially, the melamine cross-linking agent having a high curing rate is advantageously used, and is more advantageously used with a curing catalyst such as a protonic acid and an ammonium salt thereof.

The amount of the cross-linking agent in the coating layer is 0.1 to 60% by weight, preferably 1 to 40% by weight of solid components in the coating layer.

Further, the coating layer may contain an antifoaming agent, a coating properties modifier, a thickening agent, an organic lubricant, organic polymer particles, an antioxidant, an ultraviolet absorber, a foaming agent, a dye and so on, as occasion demands. The coating layer may also contain a polymer other than the polymers in the present invention in order to improve the properties of the coating solution or the coating layer.

The coated film is formed by an in-line coating method (post-coating stretching method) which comprises applying a solution or dispersion (hereinafter referred to as "coating solution") containing the above-mentioned materials to a polyester film and stretching the polyester film. Examples of the in-line coating method include a method in which a coating solution is applied to a non-stretched polyester film and the polyester film is then biaxially stretched successively or simultaneously; a method in which a coating solution is applied to a monoaxially stretched polyester film and then stretched in the direction perpendicular to the direction of the previous monoaxial stretching; a method in which a coating solution is applied to a biaxially stretched polyester film and then further stretched in the transverse and/or machine direction. The applicator of the above-described coating solution is exemplified by a reverse-roll coater, a gravure coater, a rod coater and an air doctor coater which are described in "Coating Method" by Yuji Harasaki, published by Maki Shoten in 1979.

The above-described stretching process is preferably carried out at 60 to 130°C, and the stretch ratio is at least 4 times, preferably 6 to 20 times, in terms of ratio by area. The stretched film is subjected to heat treatment at 150 to 250°C.

It is preferable that the stretched film is then 0.2 to 20% relaxed in the machine and transverse directions in the zone at the highest temperature of the heat treatment and/or a cooling zone at the outlet of the heat treatment.

A preferable method is a method in which a coating solution is applied to a monoaxially stretched polyester film which is 2 to 6 times stretched by a roll stretching method at 60 to 130°C, and the monoaxially stretched polyester film is then 2 to 6 times stretched at 80 to 130°C in the direction perpendicular to the direction of the previous stretching after it has been appropriately dried or immediately after the coating without drying, and is subjected to heat treatment at 150 to 250°C for 1 to 600 seconds.

According to this method, the drying of the coating layer simultaneously with stretching is possible and it is possible to reduce the thickness of the coating layer in accordance with the stretching ratio. A film which is suitable for a polyester film base at a relatively low cost can be produced.

The coating solution used in the present invention may be applied to either only one surface of the polyester film or both surfaces thereof. When the coating solution is applied to only one surface, a coating layer is formed on the other surface by using a coating solution other than the coating solution used in the present invention, as occasion demands, so that other properties can be imparted to the polyester film of the present invention. In order to improve the coating properties of the coating solution on the film and the adhesion thereto, the film may be subjected to chemical treatment or discharge before coating. In addition, in order to improve the adhesion of the biaxially oriented polyester film of the present invention to the coating layer and the coating properties of the film, the coating layer may be subjected to discharge treatment after it has been formed.

The thus-produced polyester film on which the coating layer is formed preferably has a thickness within the range of 3 to 500 µm, and the thickness of the antistatic layer is preferably 0.01 to 5 µm, more preferably 0.02 to 1 µm. If the thickness of the antistatic layer is less than 0.01 µm, unevenness tends to occur in the coating layer of products because uniform coating layers cannot be easily obtained, while if the thickness is over 5 µm, the handling of the films produced tends to be difficult owing to the deterioration in the slipping properties.

The film of the present invention can be used by itself, as an OHP (Over Head Projection) sheet for PPC (Plane Paper Copy) copying and an image-receiving sheet for melting-type thermal transfer printing.

When the film of the present invention is used as an image-receiving sheet for sublimation-type thermal transfer printing, an image-receiving layer, for example, which is described below may be formed.

The film of the present invention is suitable for a base film of a magnetic recording medium. The film can be used as a magnetic tape, a floppy disk, a magnetic card, by forming a magnetic layer by deposition or application of a magnetic coating solution described below.

In addition, the film can be used as a display or packaging film after printing.

The coated film of the present invention is excellent in antistatic property, adhesion and slipperiness. An OHP film, a magnetic recording medium and an image-receiving film for thermal transfer printing are improved in antistatic property and durability. The coated film of the present invention is industrially valuable.

[Examples]

The present invention will be explained more in detail, while referring the following non-limitative Examples.
The term "parts" means parts by weight.
The evaluation methods employed in the examples are as follows:

(1) Surface resistivity:

A concentric electrode 16008A (trade name) manufactured by Yokokawa Hewlett-Packard Co., Ltd. which had an inner electrode with a diameter of 50 mm and an outer electrode with a diameter of 70 mm was placed on a sample film in an atmosphere of 23°C and 50% RH. A voltage of 100 V was then applied between the electrodes, and the surface resistivity of the sample film was measured by using a high resistance meter 4329A (trade name) manufactured by the same corporation.

(2) Friction coefficient

Two films each cut into a width of 15 mm and a length of 150 mm were laid on a flat glass plate. A rubber plate was placed on the upper film and a load was placed on the rubber plate. The two films were slipped on each other at a contact pressure of 98 Pa (2 g/cm$^2$) and a speed of 20 mm/min to measure a frictional force. The friction coefficient immediately before slipping was regarded as a static friction coefficient (μs) and the friction coefficient at the point which is 5 mm distant from the starting point was regarded as a dynamic frictional coefficient (μd). The measuring atmosphere was 23°C and 50% RH.

(3) Adhesion to toner for PPC

An image was printed on a film by using a copying machine "4790" and a toner "B228" (both produced by Fuji Xerox Co., Ltd.) and the toner layer in the solid portion was subjected to the following cellophane tape peeling test to evaluate the adhesion to the toner layer.
A cellophane tape having a width of 18 mm produced by Nichiban Co., Ltd. was pasted in length of 7 cm on the surface of the film in such a manner as not to produce any air bubble between the tape and the film. A constant load was applied to the cellophane tape by a manual loading roll of 3 kg to fix the film. One end of the cellophane tape was connected to a weight of 500 g and 180° peeling of the cellophane tape was initiated when the weight naturally dropped in height of 45 cm. From the state of the toner (ink) coating layer, the adhesion was evaluated in five ranks on the basis of the following criteria:

Rank 5: No ink was transferred to the adhesive surface of the cellophane tape.
Rank 4: Less than 10% of the ink was transferred to the adhesive surface of the cellophane tape.
Rank 3: 10 to 50% of the ink was transferred to the adhesive surface of the cellophane tape.
Rank 2: More than 50% of the ink was transferred to the adhesive surface of the cellophane tape.
Rank 1: The ink was completely transferred to the adhesive surface of the cellophane tape.

(4) Adhesion to magnetic layer

A magnetic coating was prepared by dispersing 50 parts of polyurethane, 20 parts of nitrocellulose, 30 parts of a vinyl chloride-vinyl acetate resin, 7.5 parts of an isocyanate compound, 12 parts of carbon black, 4 parts of lecithin and 460 parts of $\gamma$-$Fe_2O_3$ in 900 parts of a solvent produced by mixing the equal amounts of methyl ethyl ketone, toluene and methylisobutyl ketone. The thus-prepared magnetic coating was applied to a surface of the film, dried at 80°C for 1 minute and thereafter aged at 80°C for 24 hours to obtain a magnetic recording medium having a magnetic layer of about 5 μm in thickness. The adhesion to the magnetic layer was measured by the cellophane tape peeling test in the same way as in (3).

(5) Adhesion to UV curing ink layer

A screen ink ("FDOL Indigo APN", produced by Toyo Ink Mfg. Co., Ltd.), was transferred on a surface of a film by an off-set printing machine (RI-tester "RI-2") to obtain an ink layer of 2 μm in thickness. The film was mounted on a UV-light irradiation device ("UVC-402/1HN: 302/1MH", produced by Ushio Electric Inc.) to cure the ink at a mercury lamp output of 80 W/cm, at a line speed of 10 m/min and with an interval of 100 mm between the lamp and the film. Immediately after the ink was cured, the adhesion was evaluated by the cellophane tape peeling test.

(6) Adhesion to thermal ink for thermal transfer printing

An image was printed on a film by using a thermal transfer color copying machine "CX-5000" and an ink donor film "CX-501R2" (both produced by Sharp Kabushiki Kaisha). The adhesion to the thermal melt-wax (thermal ink) layer was measured by the cellophane tape peeling test.

(7) Adhesion to image receiving layer of sublimation-type dye for thermal transfer printing

Receiving layers were formed by using the following coating solutions (a) and (b):

(a) In a mixed solvent of methyl ethyl ketone, toluene and cyclohexane, the following compounds were dissolved to obtain a 20 wt% solution:

| | |
|---|---|
| Polyester ("Byron 600", produced by Toyobo Co., Ltd.) | 62 parts |
| Vinyl chloride-vinyl acetate copolymer ("VYHH", produced by UCC) | 26 parts |
| Amino-modified silicone ("KF-393", produced by Shin-Etsu Chemical Co., Ltd.) | 6 parts |
| Epoxy-modified silicone ("X-22-343", produced by Shin-Etsu Chemical Co., Ltd.) | 6 parts |

(b) In a mixed solvent of methanol, methyl ethyl ketone and dimethylformamide, the following compounds were dissolved to obtain a 20 wt% solution:

| | |
|---|---|
| Poly(butyl methacrylate-methyl methacrylate) [monomer ratio (wt%): 60 : 40] | 70 parts |
| Dipentaerythritol hexaacrylate | 5 parts |
| Dipentaerythritol pentaacrylate | 5 parts |
| Dipentaerythritol tetraacrylate | 5 parts |
| 2,2-Bis(4-acryloxydiethoxyphenyl)propane | 15 parts |
| 1-Hydroxycyclohexyl phenyl ketone | 6 parts |

To a surface of a film, each of the solutions (a) and (b) was applied so as to obtain a coating layer of 5 μm in thickness after drying. In the case that the solution (b) was used, the coating layer was cured by the same method as shown in (5). Cuts like a checkerboard (intervals: 1 mm) was inserted on each of the coating layer by a cutter knife. On the cut portion, a polyester film of 18 mm in width (No. 31, produced by Nittou Electric Industrial Co., Ltd.) was pasted in such manner as not to produce any air bubble between the tape and the film. The base polyester film was peeled in an angle of 180° and the state of the coating layer was evaluated in five ranks as shown in (3).

(8) Haze

A haze of a film was measured by a separate bulb-type turbidimeter (NDH-20D (trade name); produced by Nihon Denshoku Kogyo) in accordance with JIS-K6714.

(9) Surface roughness (Ra)

The surface roughness is represented by a center line average roughness Ra (μm). Ra was measured by a surface roughness meter SE-3F (trade name, Kosaka Kenkyusho K.K.) A portion of the standard length L (2.5 mm) in a direction of a center line was sampled from a cross section curve of the film. The sampled portion was expressed as the roughness curve, y = f(x), while taking the center line of the sampled portion on x axis and and longitudinal direction on y axis. The value (μm) was given by the following formula:

$$Ra = \frac{1}{L} \int_0^L |f(x)|dx$$

The center line average roughness of the film was determined by finding 10 cross section curves on the surface of the sample film, and averaging the values of center line of the portions sampled from the cross section curves. The radius of the tip of the probe was 2 μm, the load applied to the probe tip was 30 mg, and the cutoff value was 0.08 mm.

(10) Stability of the coating solution

A coating solution was diluted by water to 10 wt% of solid content. The diluted coating solution was left in a glass sample bottle for 24 hours, and the amount of an aggregate which precipitated in the bottom of the bottle was visually evaluated in the following ranks:

○: There was no precipitate.
○-Δ: There was a very slight amount of the precipitate, and most of the residual left in the form of the stable dispersion.
Δ: There was a small amount of the precipitate, but the solution could be used as a coating.
Δ-×: There was a considerable amount of the precipitate.
×: There was a great amount of the precipitate, and the solution could not be used as a coating.

Comparative Examples 1 and 2

Polyethylene terephthalate of an intrinsic viscosity of 0.65 was melt-extruded at a temperature of 280 to 300°C and cast on a cooling drum in combination with an electrostatic contact method to obtain an amorphous film having a thickness of 1,090 µm. The film was stretched by 3.3 times in the machine direction at 95°C. Each of the coating solutions having compositions of Comparative Examples 1 and 2 in Table 2 was applied to one surface of the stretched film. The substances of the symbols in Table 2 are shown in Table 1. The composition of the components in the coating layer in Table 2 is represented by ratio by weight in a dried state. Each of the coated films was further stretched by 3.3 times in the transverse direction at 110°C. Each of the thus-stretched films was subjected to heat treatment at 210°C to obtain a film having a base polyester film of 100 µm in thickness and a coating layer of 0.10 µm in thickness. The properties of the films are shown in Table 2. The films of Comparative Example 1 and 2 were excellent in adhesion. Adhesions to a magnetic layer and to a UV curing ink of the films were evaluated as 5 by the cellophane tape peeling test. The films had a low friction coefficient and were practically excellent.

Comparative Example 3

Polyethylene terephthalate of an intrinsic viscosity of 0.65 was melt-extruded at a temperature of 280 to 300°C and cast on a cooling drum in combination with an electrostatic contact method to obtain an amorphous film having a thickness of 1,090 µm. The film was stretched by 3.3 times in the machine direction at 95°C and further stretched by 3.3 times in the transverse direction at 110°C. The thus-stretched film was subjected to heat treatment at 210°C to obtain a biaxially stretched film having a thickness of 100 µm. The properties of the film are shown in Table 2. While the film was excellent in transparency, the film was inferior in slipperiness, antistatic property and adhesion. All of adhesion to a toner for PPC, adhesion to a magnetic layer, adhesion to a UV curing ink and adhesion to an image receiving layer of a sublimination-type dye for thermal transfer printing were evaluated as 1 by the cellophane tape peeling method.

Comparative Examples 4 and 5

Films, each of which had a base polyester layer of 100 µm in thickness and a coating layer of 0.10 µm in thickness, were produced by the same way as in Comparative Example 1 except that the coating solutions having compositions of Comparative examples 4 and 5 in Table 2 were used. The substances of the symbols in Table 2 are shown in Table 1. The properties of the films are shown in Table 2. The films of Comparative Examples 4 and 5 had large friction coefficients and therefore could not practically used.

Examples 1 to 6

Films were formed by the same way as in Comparative Examples 1 and 2 except that the coating solutions having compositions of Examples 1 to 6 in Table 2. The properties of the films are shown in Table 2. All of the films were excellent in adhesion. Adhesions to a magnetic layer and to a UV curing ink of the films were evaluated as 5 by the cellophane tape peeling test.

Examples 7 and 8

Films were formed by the same way as in Comparative Examples 1 and 2 except that the coating solutions having compositions of Examples 7 and 8 in Table 2. The properties of the films are shown in Table 2. The stability of

the coating solutions were good similarly to the film of the following Example 12 and the films were excellent in transparency, slipperiness and antistatic property. Each of the films was excellent in adhesion. Adhesion to a toner for PPC, adhesion to a magnetic layer, adhesion to a UV curing ink and adhesion to a toner for PPC were evaluated as 5 by the cellophane tape peeling method.

Examples 9 to 12

Films were formed by the same way as in Comparative Examples 1 and 2 except that the coating solutions having compositions of Examples 9 to 12 in Table 2. The properties of the films are shown in Table 2. Each of the films was excellent in adhesion. Adhesion to a magnetic layer was evaluated as 5 by the cellophane tape peeling method. Especially, when an ionene polymer having a urea bond in the main chain thereof (L) was used (Example 12), the stability of the coating solution and the transparency of the film became better.

Comparative Example 6

The film having a thickness of 100 μm was formed by the same way as Comparative example 3 except that a small amount of fine particles was added to the polyester. The film was transparent and excellent in slipperiness, but was not applicable to a continuous paper-supplying system in a PPC machine. And the film was inferior in the adhesion to a toner for PPC.

Example 13

A film having coating layers on both surfaces of the film was formed by the same way as Comparative Example 1 except that the coating solution having the composition of Example 13 in Table 2 and that the coating solution was applied to both surfaces of the film. On one surface of the film, an image-receiving layer of a sublimination-type dye for thermal transfer printing was laminated according to the method described in the evaluation method of "(7) Adhesion to image-receiving layer of sublimination-type dye for thermal transfer printing". The adhesions to the image-receiving layers (a) and (b) were evaluated as 5 by the cellophane peeling test. On a image-receiving film on which the image-receiving layer (a) described in the (7) was laminated, an image was printed by a video printer ("UP-5000", produced by Sony Corporation). By the printing, a excellent dye-image was obtained and the film could be suitably used as a OHP film. Since attraction of dust due to static electricity does not occurs at printing on the film of Example 13, a perfect image could be obtained. Also the film was excellent in adhesion to an image-receiving layer. Therefore, the film of Example 13 was excellent as an image-receiving film of a sublimination-type dye for thermal transfer printing.

Comparative Example 7

A film was formed by the same way as Comparative example 5, except that a coating solution having the composition of Example 7 in Table 2 was applied to a surface of the monoaxially stretched film before stretching in transverse direction. The film was excellent in transparency, slipperiness and adhesion as well as antistatic property. All of adhesion to a toner for PPC, adhesion to a magnetic layer and adhesion to a UV curing ink were evaluated as 5 by the cellophane tape peeling method.

The results of the above examples are shown in Table 2.

Table 1

(Symbols in Table 2)

| Symbol | Substance |
|---|---|
| A | Terpolymer of methyl methacrylate, ethyl acrylate and methyloylacrylamide (monomer ratio (mol%): 47.5 : 47.5 : 5), in the form of a nonionic water-dispersion |
| B | "Primal HA-12" produced by Nihon Acryl Kagaku KK., polyacrylate in the form of a nonionic water-dispersion |
| C | "Superflex E9000" produced by Dai-ichi Kogyo Seiyaku Co., Ltd., polyurethane in the form of a nonionic water-dispersion |
| D | "Adekabontiter HUX-212" produced by Asahi Denka Kogyo KK., polyurethane in the form of a cationic water-dispersion |
| E | "Plassize FR-627" produced by Goou Kagaku KK, polyester in the form of a nonionic water-dispersion |
| F | "Sumikaflex 820" produced by Sumitomo Chemical Co., Ltd., terpolymer of ethylene, vinyl acetate and vinyl chloride, in the form of a nonionic water-dispersion |
| G | Aqueous methoxymethylmelamine solution |
| H | Ionene compound<br>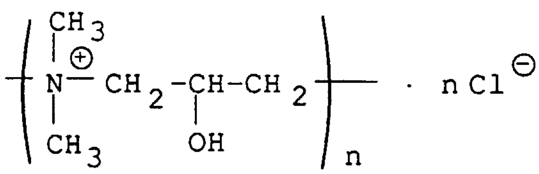<br>Average molecular weight: about 6000. |

Table 1 (continued)

| Symbol | Substance |
|---|---|
| I | 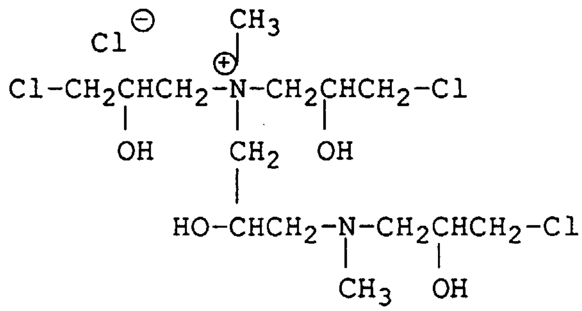<br>Amine-epichlorohydrine condensate<br>Average molecular weight: about 60,000 |
| J | Ionene compound<br>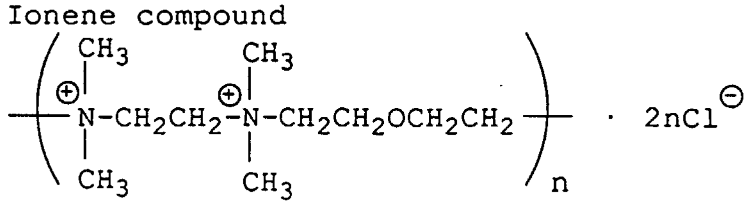<br>Average molecular weight: about 6,000 |
| K | Ionene compound<br>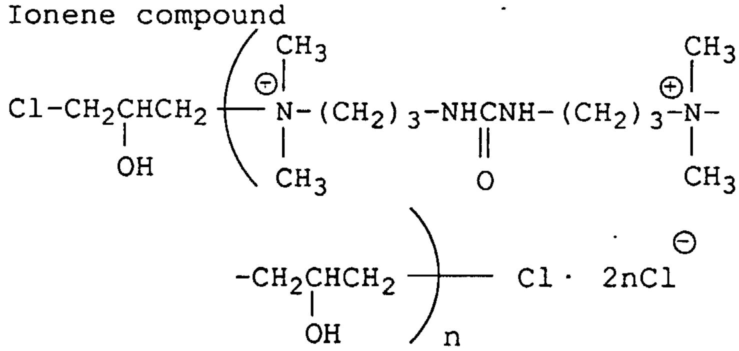<br>Average molecular weight: about 7,000 |
| L | Ionene compound<br>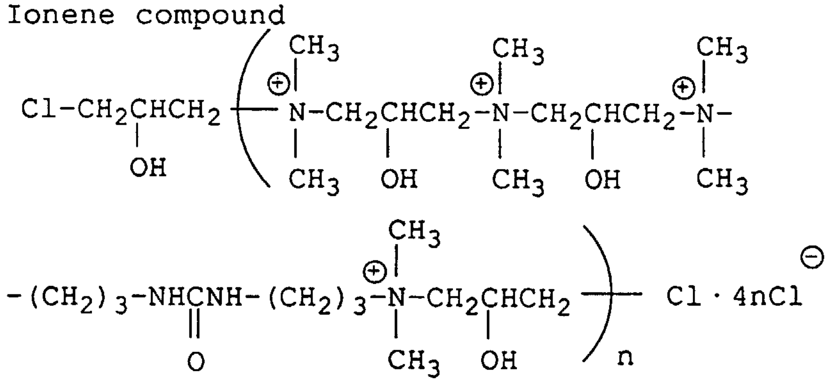<br>Average molecular weight: about 3,200 |

Table 1 (continued)

| Symbol | Substance |
|---|---|
| M | Alumina particles (average particle size: 0.07 µm) in the form of a cationic water-dispersion |
| O | Silicon dioxide particles (average particle size: 0.15 µm) which are subjected to graft-treatment with ethylene glycol, in the form of an anionic water-dispersion; (the ratio of grafting: 1.7 mmol/g) |
| P | Particles (average particle size: 0.2 µm) in the form of a water-dispersion, obtained by emulsion polymerization of styrene, divinylbenzen and methyl methacrylate (monomer ratio (wt%): 90 : 8 : 2) (emulsifying agents used: sodium dodecylbenzensulfonate, sodium polyoxyethylenelaurylethersulfonate and polyoxyethylenenonylphenylether (ratio (wt), 6 : 2 : 2); the ratio of the monomers to the emulsifying agents (wt): 100 : 2.5) |
| Q | Particles (average particle size: 0.1 µm) in the form of a water-dispersion, obtained by emulsion polymerization of methyl methacrylate, methacrylic acid and divinylbenzene (monomer ratio (wt%): 78 : 5 : 17) (an emulsifying agent used: sodium dodecylbenzensulfonate; the ratio of the monomers to the emulsifying agent (wt): 100 : 2.5) |
| R | Particles obtained by surface treatment of Q with a cationic surfactant (the cationic surfactant: dodecyltrimethylammonium chloride; the ratio of the cationic surfactant to particles (wt): 10 : 90) |

Table 2

| | Composition of the coating (parts in a dried state) | Thickness of the coating layer (μm) | Base polyester film (thickness) | Properties of the coated film | | | Stability of the coating solution |
|---|---|---|---|---|---|---|---|
| | | | | Haze (%) | Friction coefficient μs/μd | Surface resistivity (Ω/□) | |
| Comparative example 1 | A: G: H: M 65:10:20: 5 | 0.1 | High-transparency film (100 μm) | 5.2 | 0.54/0.47 | $5\times10^{10}$ | Δ |
| Comparative example 2 | A: G: K: M 65:10:20: 5 | 0.1 | High-transparency film (100 μm) | 2.6 | 0.52/0.47 | $4\times10^{9}$ | O-Δ |
| Comparative example 3 | (no coating layer, (uncoated)) | | High-transparency film (100 μm) | 0.8 | >1/>1 | $>10^{15}$ | - |
| Comparative example 4 | A: G: H 70:10:20 | 0.1 | High-transparency film (100 μm) | 3.3 | >1/>1 | $2\times10^{10}$ | O-Δ |
| Comparative example 5 | A: G: K 70:10:20 | 0.1 | High-transparency film (100 μm) | 1.1 | >1/>1 | $3\times10^{9}$ | O |
| Example 1 | A: G: K: O 65:10:20: 5 | 0.1 | High-transparency film (100 μm) | 1.6 | 0.48/0.43 | $3\times10^{9}$ | O |
| Example 2 | B: G: K: O 65:10:20: 5 | 0.1 | High-transparency film (100 μm) | 1.7 | 0.47/0.42 | $3\times10^{9}$ | O |
| Example 3 | C: G: K: O 65:10:20: 5 | 0.1 | High-transparency film (100 μm) | 2.5 | 0.41/0.35 | $6\times10^{9}$ | O |
| Example 4 | D: G: K: O 65:10:20: 5 | 0.1 | High-transparency film (100 μm) | 2.3 | 0.45/0.40 | $6\times10^{9}$ | O |
| Example 5 | E: G: K: O 65:10:20: 5 | 0.1 | High-transparency film (100 μm) | 1.9 | 0.47/0.41 | $4\times10^{9}$ | O |
| Example 6 | F: G: K: O 65:10:20: 5 | 0.1 | High-transparency film (100 μm) | 2.0 | 0.46/0.41 | $5\times10^{9}$ | O |
| Example 7 | B: G: K: P 65:10:20: 5 | 0.1 | High-transparency film (100 μm) | 3.5 | 0.35/0.31 | $3\times10^{9}$ | O |
| Example 8 | B: G: K: R 65:10:20: 5 | 0.1 | High-transparency film (100 μm) | 1.3 | 0.50/0.44 | $3\times10^{9}$ | O |

Table 2 (continued)

| | Composition of the coating (part in a dried state) | Thickness of the coating layer (μm) | Base polyester film (thickness) | Properties of the coated film | | | Stability of the coating solution |
|---|---|---|---|---|---|---|---|
| | | | | Haze (%) | Friction coefficient μs/μd | Surface resistivity (Ω/□) | |
| Example 9 | B: G: H: O 65:10:20: 5 | 0.1 | High-transparency film (100 μm) | 4.2 | 0.40/0.37 | $1\times10^{10}$ | O-Δ |
| Example 10 | B: G: I: O 65:10:20: 5 | 0.1 | High-transparency film (100 μm) | 4.1 | 0.38/0.35 | $2\times10^{11}$ | O-Δ |
| Example 11 | B: G: J: O 65:10:20: 5 | 0.1 | High-transparency film (100 μm) | 3.5 | 0.41/0.37 | $4\times10^{9}$ | O-Δ |
| Example 12 | B: G: L: O 65:10:20: 5 | 0.1 | High-transparency film (100 μm) | 1.7 | 0.48/0.42 | $4\times10^{9}$ | O |
| Comparative example 6 | (no coating layer, (uncoated)) | | Transparency film (100 μm) | 4.5 | 0.50/0.46 | $>10^{15}$ | - |
| Example 13 | B: G: K: O 55:20:20: 5 | 0.08 (both surfaces) | High-transparency film (100 μm) | 2.3 | 0.45/0.42 | $3\times10^{9}$ | O |
| Comparative example 7 | A: G: H: M 65:10:20: 5 | 0.1 | High-transparency film (100 μm) | 2.8 | 0.42/0.40 | $3\times10^{9}$ | Δ |

NOTE:

In Comparative Examples 1,2 and 7 and in Examples 1 to 12, friction coefficient of the coated surface was measured.

## Claims

1. A coated film which comprises a polyester film and at least one coating layer on one or both surfaces of said polyester film: said coating layer comprising (a) a polymer having cationic nitrogens in the main chain thereof, (b) a binder polymer selected from the group consisting of polyesters, polyacrylates, polyurethanes, chlorine-containing polymers and mixtures thereof, (c) particles having an average particle size of not more than 10 μm, and (d) a cross-linking agent selected from the group consisting of melamine cross-linking agents, epoxy cross-linking agents and mixtures thereof, **characterized in that** said particles are selected from the group consisting of polyhydric alcohol graft-treated inorganic particles, surfactant treated organic particles and mixtures thereof, said inorganic particles being selected from the group consisting of silicon dioxide, alumina, zirconium oxide, titanium oxide, antimony oxide and carbon black.

2. The coated film according to claim 1, wherein the content of said polymer having cationic nitrogens in the main chain thereof in the coating layer is 5 to 95% by weight.

3. The coated film according to claim 1, wherein said polymer having cationic nitrogens in the main chain thereof is at least one polymer selected from the group consisting of ionene polymers which have respectively constitutional units represented by the following formula (I) or (II):

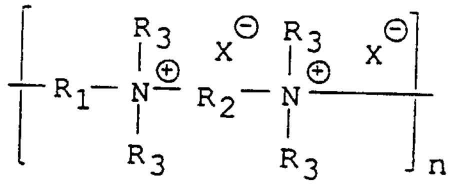

(I)

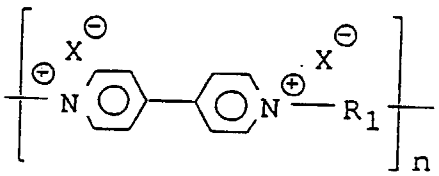

(II)

wherein X is bromine or chlorine; each of $R_1$ and $R_2$ independently represents an alkylene group, an arylene group, a divalent group (A) containing a hetero element which is derived from an ether or a derivative thereof, urea or a derivative thereof, piperadine or a derivative thereof, or a divalent group (B) derived from a polymer of oligomer; said alkylene group, said arylene group and said divalent group (A) may be substituted by a characteristic group; $R_3$ represents methyl group or ethyl group and n is an integer; and ionene polymers which have network structures.

4. The coated film according to claim 3, wherein said $R_3$ represents methyl group.

5. The coated film according to claim 1, wherein the content of said binder polymer in the coating layer is 5 to 95% by weight.

6. The coated film according to claim 1, wherein the content of said particles in the coating layer is 0.1 to 30% by weight.

7. The coated film according to claim 1, wherein the content of said cross-linking agent in the coating layer is 0.1 to 30% by weight of solid components in the coating layer.

8. In-line coating method for preparing a coated film according to claim 1, wherein said in-line coating method comprises the steps of:

   stretching an amorphous polyester film monoaxially by 2 to 6 times at a temperature of from 60 to 130°C by a roll stretching method;
   applying a coating solution comprising the polymer having cationic nitrogens in the main chain thereof to one

or both surfaces of the monoaxially stretched polyester film;
drying optionally the coated monoaxially stretched polyester film;
stretching the resultant monoaxially stretched polyester film by 2 to 6 times at a temperature of from 80 to 130°C in a direction perpendicular to the previous stretching direction; and
subjecting to heat-treatment at a temperature of from 150 to 250°C for 1 to 600 seconds.

**Patentansprüche**

1. Beschichtete Folie, welche eine Polyesterfolie und mindestens eine Überzugsschicht auf einer oder beiden Oberflächen der Polyesterfolie umfaßt, wobei die Überzugsschicht (a) ein Polymer mit kationischen Stickstoffen in dessen Hauptkette, (b) ein Bindemittelpolymer, gewählt aus der Polyester, Polyacrylate, Polyurethane, chlorhaltige Polymere und Mischungen hiervon umfassenden Gruppe, (c) Teilchen mit einer durchschnittlichen Teilchengröße von nicht mehr als 10 µm, und (d) ein Vernetzungsmittel, gewählt aus der Melamin-Vernetzungsmittel, Epoxyvernetzungsmittel und Mischungen hiervon umfassenden Gruppe umfaßt, dadurch gekennzeichnet, daß die Teilchen aus der Gruppe gewählt sind, bestehend aus anorganischen Teilchen, welche mit mehrwertigem Alkohol pfropfbehandelt sind, organischen Teilchen, welche mit Tensid behandelt sind, und Mischungen hiervon, wobei die anorganischen Teilchen aus der Gruppe gewählt sind, bestehend aus Siliziumdioxid, Aluminiumoxid, Zirkoniumoxid, Titanoxid, Antimonoxid und Ruß.

2. Beschichtete Folie nach Anspruch 1, wobei der Gehalt des Polymeren mit kationischen Stickstoffen in dessen Hauptkette in der Überzugsschicht 5 bis 95 Gew.-% beträgt.

3. Beschichtete Folie nach Anspruch 1, wobei das Polymer mit kationischen Stickstoffen in dessen Hauptkette mindestens ein Polymer ist, gewählt aus der Gruppe, bestehend aus Ionen-Polymeren, welche durch die folgende Formel (I) bzw. (II) wiedergegebene Aufbaueinheiten aufweisen:

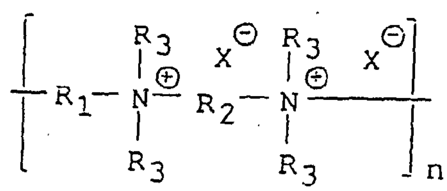

(I)

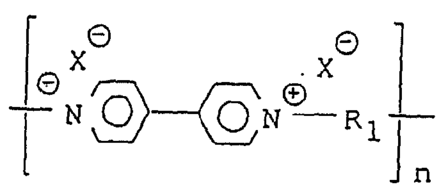

(II)

worin X Brom oder Chlor ist; jedes von $R_1$ und $R_2$ unabhängig eine Alkylengruppe, eine Arylengruppe, eine zweiwertige Gruppe (A), enthaltend ein Heteroelement, abgeleitet aus einem Ether oder einem Etherderivat, Harnstoff oder einem Derivat hiervon, Piperadin oder einem Derivat hiervon, oder eine zweiwertige Gruppe (B), abgeleitet aus einem Polymeren oder Oligomeren; bedeuten, wobei die Alkylengruppe, die Arylengruppe und die zweiwertige Gruppe (A) durch eine charakteristische Gruppe substituiert sein können; $R_3$ eine Methylgruppe oder Ethylgruppe bedeutet und n eine ganze Zahl ist; und Ionen-Polymeren, welche Netzwerkstrukturen aufweisen.

4. Beschichtete Folie nach Anspruch 3, wobei das $R_3$ eine Methylgruppe bedeutet.

5. Beschichtete Folie nach Anspruch 1, wobei der Gehalt des Bindemittelpolymeren in der Überzugsschicht 5 bis 95 Gew.-% beträgt.

6. Beschichtete Folie nach Anspruch 1, wobei der Gehalt der Teilchen in der Überzugsschicht 0,1 bis 30 Gew.-% beträgt.

7. Beschichtete Folie nach Anspruch 1, wobei der Gehalt des Vernetzungsmittels in der Überzugsschicht 0,1 bis 30 Gew.-% der Feststoffkomponenten in der Überzugsschicht beträgt.

8. In-line-Beschichtungsverfahren zur Herstellung einer beschichteten Folie nach Anspruch 1, wobei das In-line-Beschichtungsverfahren die Schritte umfaßt:

monoaxiales Recken einer amorphen Polyesterfolie um das 2 - 6fache bei einer Temperatur von 60 bis 130°C durch ein Walzenreckverfahren;
Aufbringen einer Beschichtungslösung, umfassend das Polymer mit kationischen Stickstoffen in dessen Hauptkette auf eine oder beide Oberflächen der monoaxial gereckten Polyesterfolie;
wahlweises Trocknen der beschichteten, monoaxial gereckten Polyesterfolie;
Recken der resultierenden, monoaxial gereckten Polyesterfolie um das 2 - 6fache bei einer Temperatur von 80 bis 130°C in einer zu der vorausgehenden Reckrichtung senkrechten Richtung; und
Unterziehen einer Wärmebehandlung bei einer Temperatur von 150 bis 250°C während 1 bis 600 Sekunden.

**Revendications**

1. Film revêtu qui comprend un film de polyester et au moins une couche de revêtement sur une surface ou les deux surfaces dudit film de polyester, ladite couche de revêtement comprenant :

(a) un polymère ayant des azotes cationiques dans sa chaîne principale ;
(b) un liant polymère choisi dans le groupe constitué par les polyesters, les polyacrylates, les polyuréthannes, les polymères contenant du chlore et leurs mélanges;
(c) des particules ayant une taille moyenne de particule non supérieure à 10 µm, et
(d) un agent de réticulation choisi dans le groupe constitué par les agents de réticulation mélaminés, les agents de réticulation époxy et leurs mélanges,

caractérisé en ce que lesdites particules sont choisies dans le groupe constitué par les particules inorganiques traitées par greffage d'un polyalcool, les particules organiques traitées par un agent tensio-actif et leurs mélanges, lesdites particules inorganiques étant choisies dans le groupe constitué par le dioxyde de silicium, l'alumine, l'oxyde de zirconium, l'oxyde de titane, l'oxyde d'antimoine et le noir de carbone.

2. Film revêtu selon la revendication 1, dans lequel la teneur en ledit polymère ayant des azotes cationiques dans sa chaîne principale dans la couche de revêtement est de 5 à 95% en poids.

3. Film revêtu selon la revendication 1, dans lequel ledit polymère ayant des azotes cationiques dans sa chaîne principale est au moins un polymère choisi dans le groupe constitué par les polymères ionène qui ont respectivement des motifs entrant dans leur constitution représentés par la formule (I) ou (II) suivante :

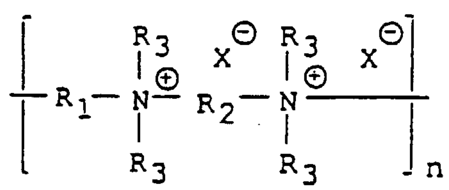

(I)

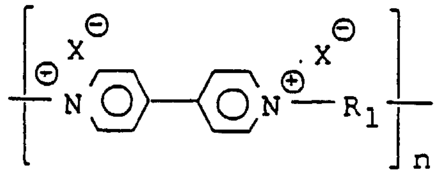

(II)

dans laquelle X est le brome ou le chlore; chacun de $R_1$ et $R_2$ représente indépendamment un groupe alkylène,

un groupe arylène, un groupe bivalent (A) contenant un hétéro-élément qui est dérivé d'un éther ou d'un dérivé de celui-ci, l'urée ou un dérivé de celle-ci, la pipérazine ou un dérivé de celle-ci, ou un groupe bivalent (B) dérivé d'un polymère d'oligomère; ledit groupe alkylène, ledit groupe arylène et ledit groupe bivalent (A) peut être substitué par un groupe caractéristique; $R_3$ représente un groupe méthyle ou un groupe éthyle et n est un nombre entier; et les polymères ionène qui ont des structures réticulées.

**4.** Film revêtu selon la revendication 3, dans lequel ledit $R_3$ représente un groupe méthyle.

**5.** Film revêtu selon la revendication 1, dans lequel la teneur en dit liant polymère dans la couche de revêtement est de 5 à 95% en poids.

**6.** Film revêtu selon la revendication 1, dans lequel la teneur en dites particules dans la couche de revêtement est de 0,1 à 30% en poids.

**7.** Film revêtu selon la revendication 1, dans lequel la teneur en dit agent de réticulation dans la couche de revêtement est de 0,1 à 30% en poids des constituants solides dans la couche de revêtement.

**8.** Procédé de revêtement en continu pour préparer un film revêtu selon la revendication 1, dans lequel ledit procédé de revêtement en continu comprend les étapes de :

- étirage d'un film de polyester amorphe selon un axe de 2 à 6 fois à une température de 60 à 130°C par un procédé d'étirage au rouleau;
- application d'une solution de revêtement comprenant le polymère ayant des azotes cationiques dans sa chaîne principale sur une surface ou les deux surfaces du film de polyester étiré selon un axe;
- séchage éventuel du film de polyester étiré selon un axe et revêtu;
- étirage du film obtenu de polyester étiré selon un axe, de 2 à 6 fois à une température de 80 à 130°C dans une direction perpendiculaire à la direction d'étirage précédente; et
- soumission à un traitement thermique à une température de 150 à 250°C pendant 1 à 600 secondes.